# EUROPEAN PATENT APPLICATION

(11) **EP 3 421 296 A1**
(43) Date of publication of application: **02.01.2019**
(21) Application number: 17773620.4
(22) Date of filing: 31.01.2017
(51) Int. Cl.: B60R 11/02

(54) **ON-VEHICLE DEVICE AND DISPLAY ATTACHMENT DEVICE**

(30) Priority: 28.03.2016 JP 2016063547
(71) Applicant: Panasonic Intellectual Property Management Co., Ltd., Osaka-shi, Osaka 540-6207 (JP)
(72) Inventor: YAMAZAKI Kei, Osaka-shi, Osaka 540-6207 (JP); MAGOORI Hiroshi, Osaka-shi, Osaka 540-6207 (JP); HOKIMOTO Yukinori, Osaka-shi, Osaka 540-6207 (JP)
(74) Representative: Eisenführ Speiser
(86) International application number: PCT/JP2017/003282
(87) International publication number: WO 2017/169071

(57) **Abstract**

An on-vehicle device includes a main body, a display, and a connector. The main body is housed in a storage box of a console panel in a vehicle. The display includes a screen larger in size than a front face of the main body. The connector connects the main body to the display. The connector includes a vertical slide mechanism configured to cause the display to slide heightwise of the screen of the display.

## Description

### TECHNICAL FIELD

The present disclosure relates to an on-vehicle device to be mounted to a vehicle. More specifically, the present disclosure relates to an on-vehicle device including a main body and a display whose screen is larger in size than a front face of the main body.

### BACKGROUND ART

Some of known on-vehicle devices include a main body and a display whose screen is larger in size than a front face of the main body. For example, Patent Literature 1 discloses a known information reproduction apparatus for a vehicle. The information reproduction apparatus includes a main body embedded in a double DIN (Deutsche Industrie Normen) size-compatible box of a console in a vehicle (ISO 7736)

The information reproduction apparatus also includes an image display measuring 7 inches or more diagonally, the image display being detachable from the main body. This configuration brings about improvement in the degree of freedom as to the size and shape of an information reproduction apparatus.

### Citation List

### Patent Literature

PTLA 1: Unexamined Japanese Patent Publication No. 2005-119491

### SUMMARY OF THE INVENTION

The present disclosure provides an on-vehicle device including a main body, a display, and a connector. The main body is housed in a storage box of a console panel in a vehicle. The display includes a screen larger in size than a front face of the main body. The connector connects the main body to the display. The connector includes a vertical slide mechanism configured to cause the display to slide heightwise of the screen of the display.

The present disclosure provides an on-vehicle device with improved mountability, the on-vehicle device being compatible with a wide variety of vehicle models.

### BRIEF DESCRIPTION OF DRAWINGS

FIG. 1 is a perspective view of an on-vehicle device according to an exemplary embodiment, the on-vehicle device being mounted to a vehicle.
FIG. 2 is a side view of the on-vehicle device according to the exemplary embodiment.
FIG. 3 is a rear view of a display and a display cover according to the exemplary embodiment.
FIG. 4 illustrates an internal structure of the display cover according to the exemplary embodiment.
FIG. 5 is a sectional side view of a lock mechanism according to the exemplary embodiment, the lock mechanism locking the display.
FIG. 6 is a sectional side view of the lock mechanism according to the exemplary embodiment, the lock mechanism unlocking the display.
FIG. 7 illustrates the display according to the exemplary embodiment, the display being allowed to slide upward.
FIG. 8 illustrates the display according to the exemplary embodiment, the display being allowed to slide downward.
FIG. 9 illustrates how the display according to the exemplary embodiment tilts.
FIG. 10 illustrates how the display according to the exemplary embodiment tilts.
FIG. 11 is a perspective view of a connector according to the exemplary embodiment, the connector being seen from below.
FIG. 12 is an exploded perspective view of the connector according to the exemplary embodiment, the connector being seen from below.
FIG. 13 illustrates how the display according to the exemplary embodiment slides backward.
FIG. 14 illustrates how the display according to the exemplary embodiment slides forward.
FIG. 15 is a perspective view of the on-vehicle device according to the exemplary embodiment, the on-vehicle device seen from its rear side.
FIG. 16 is an exploded perspective view of the display and the display cover according to the exemplary embodiment.

### DESCRIPTION OF EMBODIMENT

Prior to a description concerning an exemplary embodiment of the present disclosure, a brief description will be given of known on-vehicle devices. Some of known on-vehicle devices include a main body and a display whose screen is larger in size than a whole face of the main body. Depending of a position of the display, the on-vehicle devices can therefore impair visibility and operability of a hazard button or interfere with a vehicle component such as a shift knob. The on-vehicle devices are therefore poor in versatility for vehicles of various models. In other words, the on-vehicle devices are poor in mountability and are compatible with a narrow variety of vehicle models.

The present disclosure has been made in view of the circumstances described above, and provides an on-vehicle device with improved mountability, the on-vehicle device being compatible with a wide variety of vehicle models.

With reference to the drawings, a description will be given of an on-vehicle device according to an exemplary embodiment of the present disclosure. The exemplary embodiment shows an on-vehicle device mounted to an automobile to serve as, for example, a video player, a music player, and a navigation system.

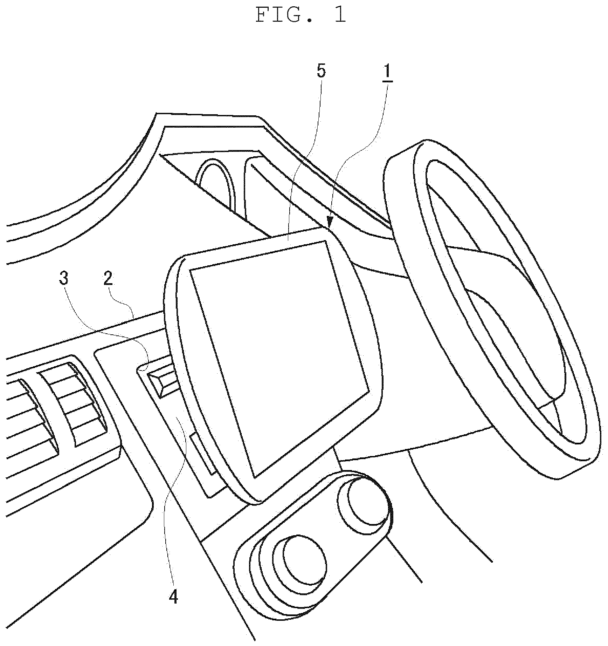

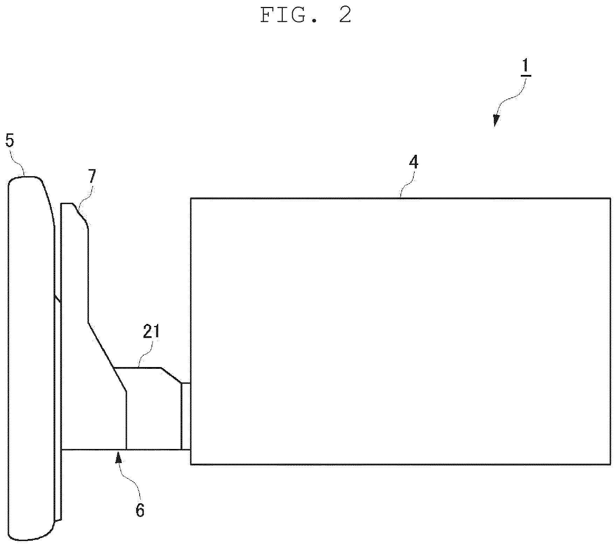

With reference to the drawings, a description will be given of a configuration of the on-vehicle device according to the exemplary embodiment of the present disclosure. FIG. 1 is a perspective view of the on-vehicle device according to the exemplary embodiment. FIG. 2 is a side view of the on-vehicle device according to the exemplary embodiment. As illustrated in FIG. 1, on-vehicle device 1 is attached to storage box 3 of console panel 2 in a vehicle. Storage box 3 is configured to house, for example, a double DIN-sized device. As illustrated in FIG. 2, on-vehicle device 1 includes main body 4, display 5, and connector 6 connecting main body 4 to display 5. Main body 4 is housed in storage box 3 of console panel 2. Display 5 includes a screen larger in size than a front face (double DIN size) of main body 4. Display 5 includes, for example, a 9-inch diagonal screen.

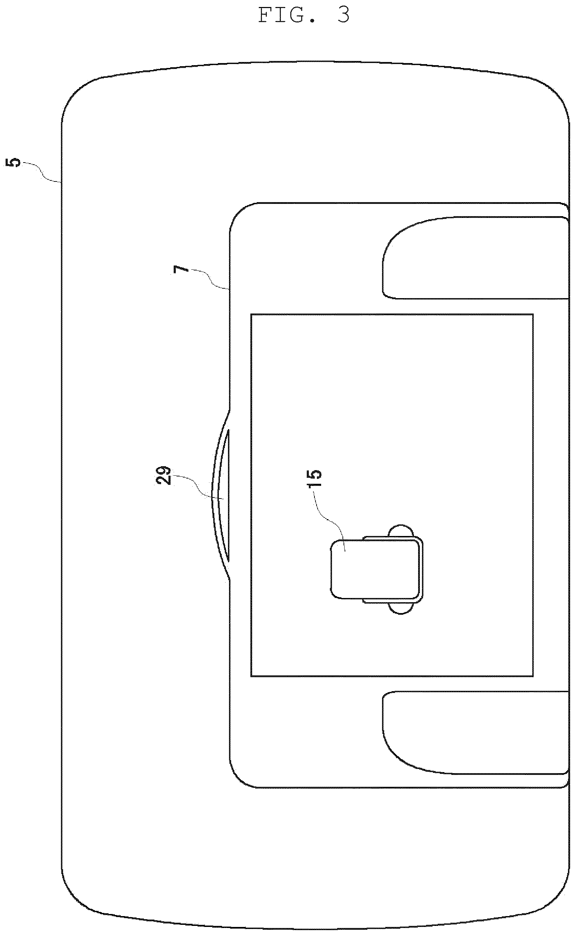

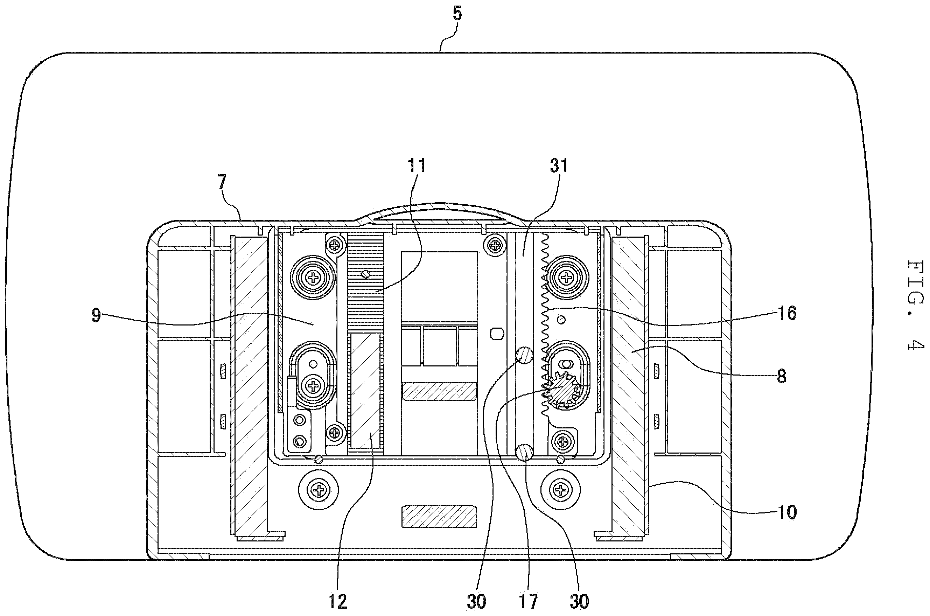

Connector 6 includes display cover 7 attached to a rear face of display 5. Display cover 7 includes a vertical slide mechanism configured to cause display 5 to slide heightwise of the screen. FIG. 3 is a rear view of display 5 and display cover 7. FIG. 4 illustrates an internal structure of display cover 7. As illustrated in FIGS. 3 and 4, display cover 7 includes vertical slide base 8 and vertical slide member 9. Vertical slide base 8 includes a pair of vertical slide rails 10 extending heightwise of the screen. Vertical slide member 9 is slidably attached to vertical slide rails 10. In this case, vertical slide rails 10 respectively hold lateral ends (left and right sides in FIG. 4) of vertical slide member 9. Vertical slide member 9 is fixed to display 5.

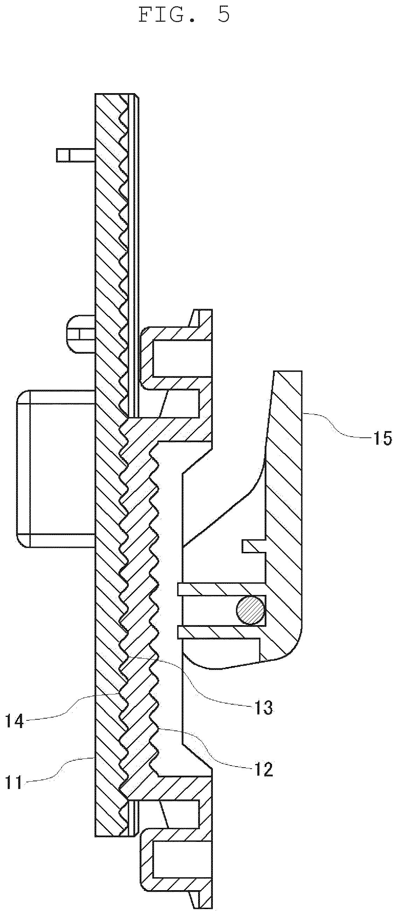

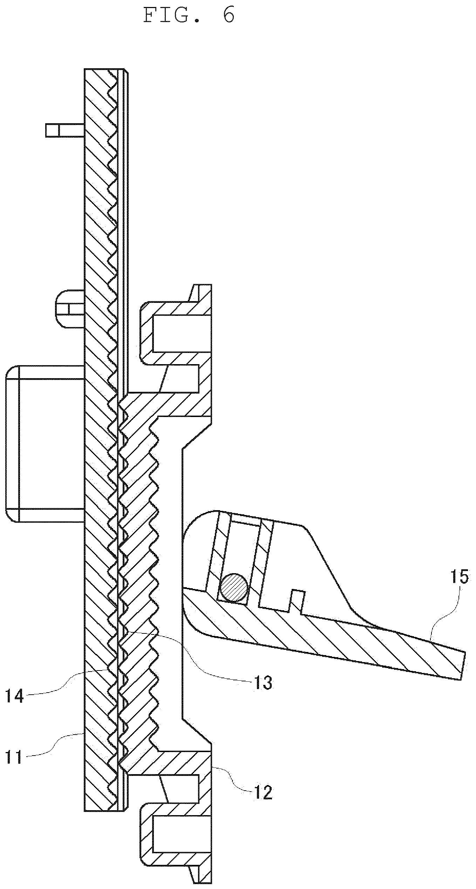

Display cover 7 includes a lock mechanism configured to lock display 5. FIGS. 5 and 6 are sectional side views of the lock mechanism. As illustrated in FIG. 4, vertical slide member 9 includes rack base 11, and vertical slide base 8 includes rack gear 12. As illustrated in FIGS. 5 and 6, rack base 11 has first engagement portion 13, and rack gear 12 has second engagement portion 14.

As illustrated in FIG. 5, rack gear 12 is pressed against rack base 11 in such a manner that knob 15 is turned and raised counterclockwise as illustrated in FIG. 5. When rack gear 12 is pressed against rack base 11, second engagement portion 14 engages with first engagement portion 13. This engagement locks vertical slide member 9 that slides relative to vertical slide base 8. Display 5 is thus locked.

As illustrated in FIG. 6, rack gear 12 is separated from rack base 11 in such a manner that knob 15 is turned and lowered clockwise as illustrated in FIG. 6. When rack gear 12 is separated from rack base 11, second engagement portion 14 disengages from first engagement portion 13. This disengagement unlocks vertical slide member 9 that slides relative to vertical slide base 8. Display 5 is thus unlocked.

As illustrated in FIG. 4, vertical slide member 9 also includes engaged gear 16 extending heightwise of the screen, and vertical slide base 8 also includes damper gear 17 configured to engage with engaged gear 16. In this case, rack base 11 and rack gear 12 are disposed near a first lateral end (left side in FIG. 4) of the screen of display 5. On the other hand, engaged gear 16 and damper gear 17 are disposed near a second lateral end (right side in FIG. 4) of the screen of display 5.

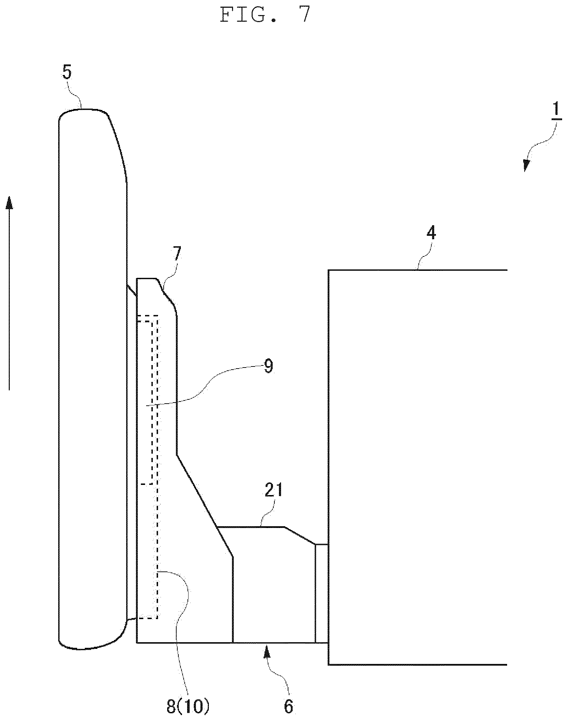

In order to cause display 5 to slide upward, a user lowers knob 15 to unlock display 5, and then pushes display 5 upward by hand. Vertical slide member 9 thus slides upward relative to vertical slide rails 10, so that display 5 slides upward as illustrated in FIG. 7. At this time, display 5 slides upward slowly by the action of damper gear 17. When display 5 stops sliding, the user raises knob 15 to lock display 5.

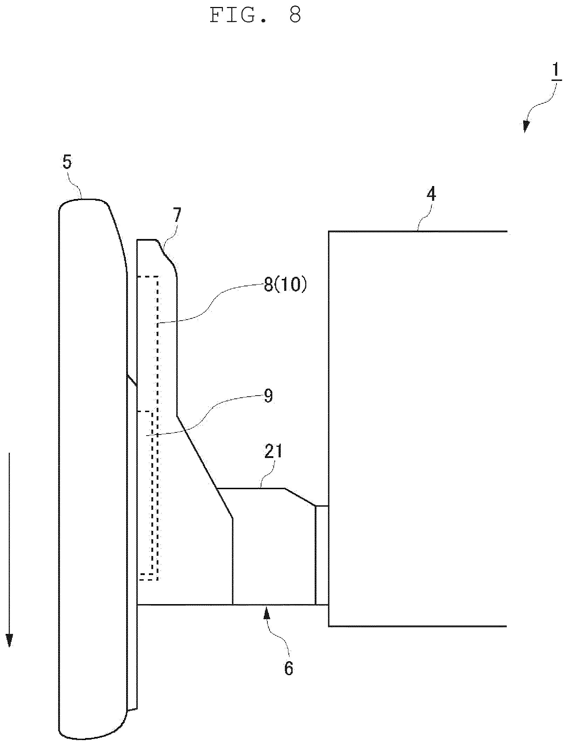

In order to cause display 5 to slide downward, the user lowers knob 15 to unlock display 5, and then pulls display 5 downward by hand. Vertical slide member 9 thus slides downward relative to vertical slide rails 10, so that display 5 slides downward as illustrated in FIG. 8. At this time, display 5 slides downward slowly by the action of damper gear 17. When display 5 stops sliding, the user raises knob 15 to lock display 5.

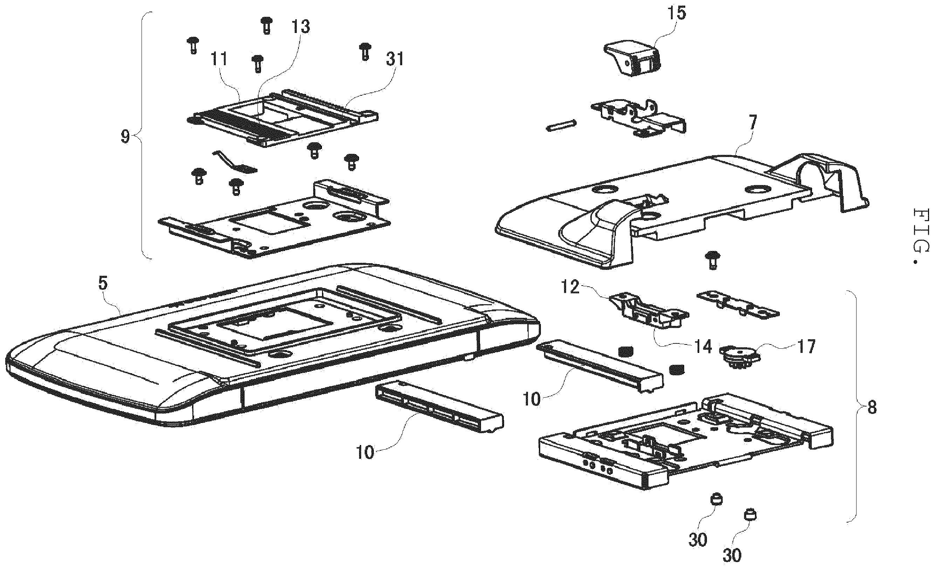

As illustrated in FIGS. 4 and 16, rack base 11 to be attached to display 5 has groove 31 extending in heightwise of the screen. Vertical slide base 8 includes two guide pins 30 to be fitted to groove 31 in rack base 11. When display 5 slides heightwise of the screen, guide pins 30 move along groove 31. Display 5 thus slides heightwise of the screen without being warped and turned laterally.

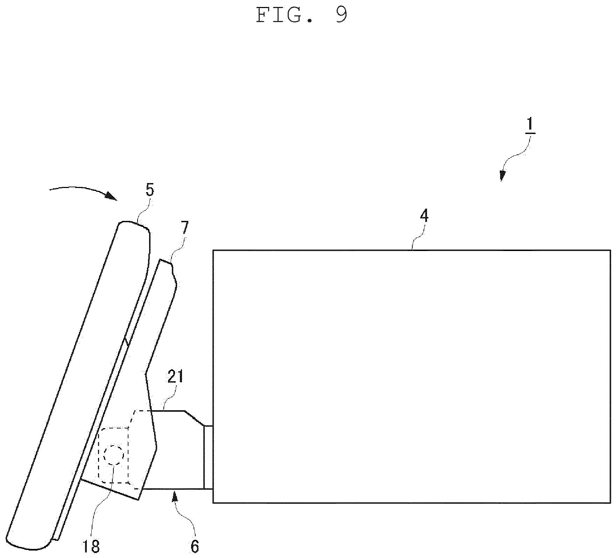

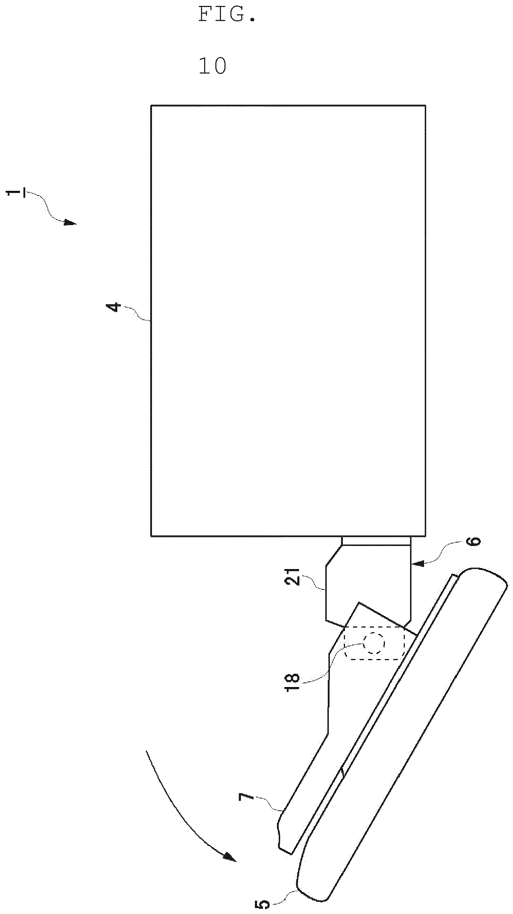

Display cover 7 also includes a tilt mechanism configured to tilt display 5. FIGS. 9 and 10 each illustrate how display 5 tilts. As illustrated in FIGS. 9 and 10, display cover 7 includes hinge 18. Display 5 turns about hinge 18 to tilt such that an upper side thereof comes close to or moves away from the main body.

In order to tilt display 5 clockwise as illustrated in FIG. 9 such that display 5 faces upward, the user directs display 5 upward by hand. Display 5 thus turns about hinge 18 to tilt upward as illustrated in FIG. 9. In order to tilt display 5 counterclockwise as illustrated in FIG. 10 such that display 5 faces downward, the user directs display 5 downward by hand. Display 5 thus turns about hinge 18 to tilt downward as illustrated in FIG. 10.

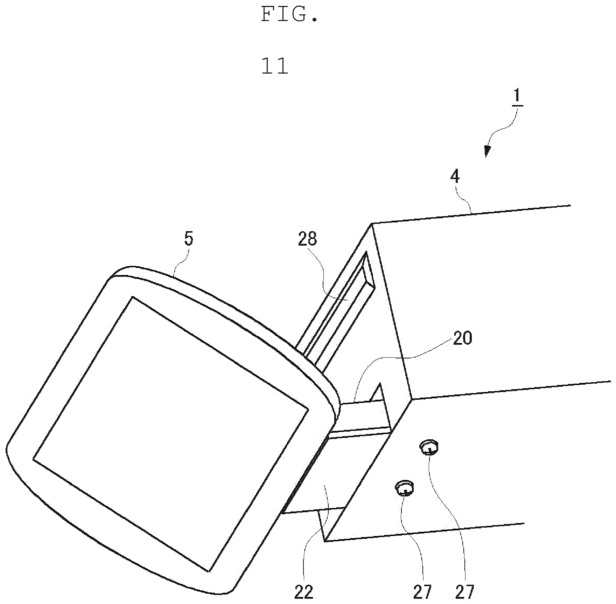

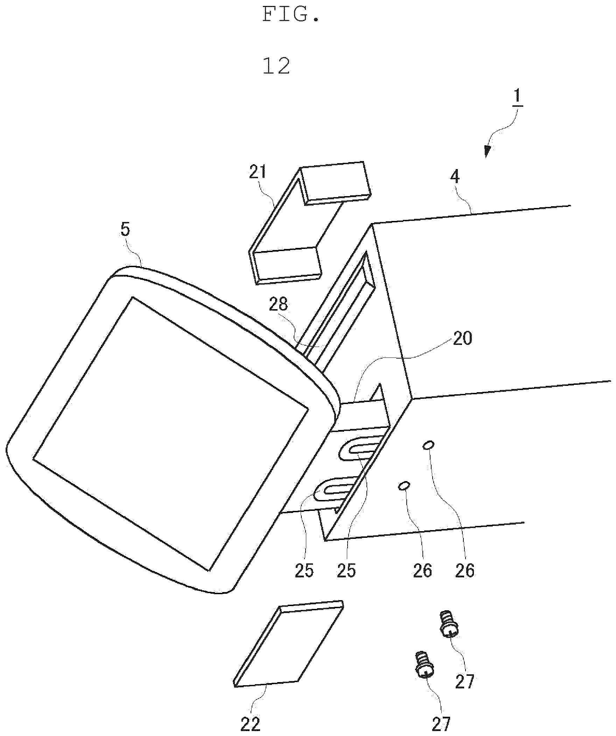

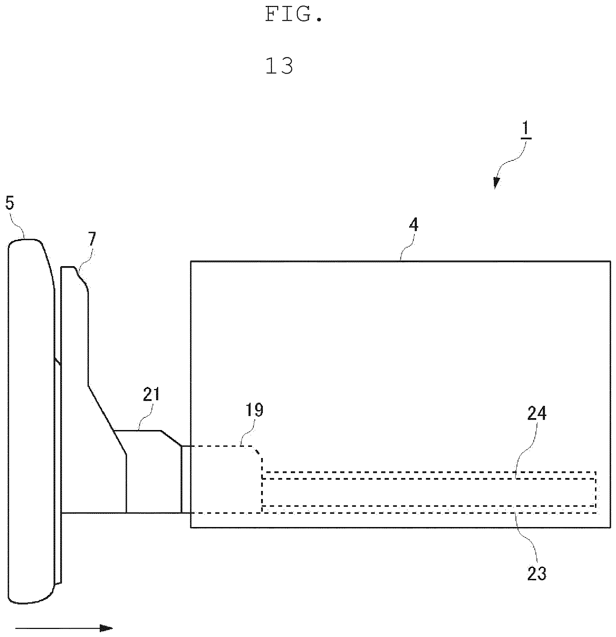

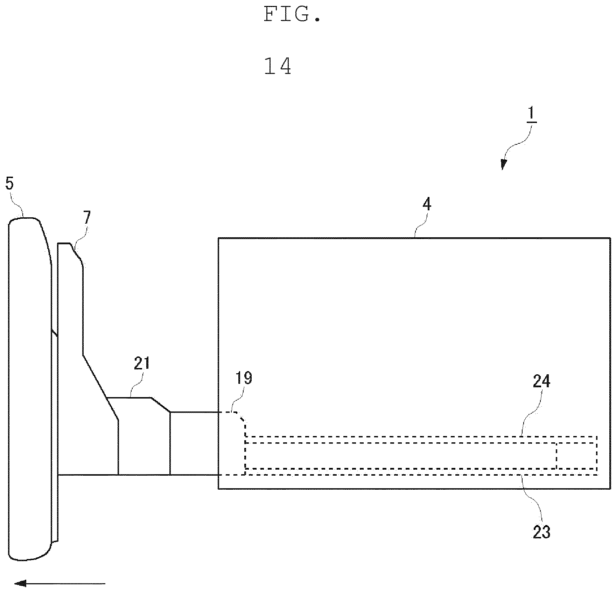

Connector 6 also includes a depthwise slide mechanism configured to cause display 5 to slide depthwise of main body 4. FIG. 11 is a perspective view of connector 6 seen from below. FIG. 12 is an exploded perspective view of connector 6 seen from below. FIG. 13 illustrates how display 5 slides backward. FIG. 14 illustrates how display 5 slides forward.

As illustrated in FIGS. 11 to 14, connector 6 includes depthwise slide member 19 connected to display cover 7. Depthwise slide member 19 is mostly housed in main body 4, except for a part protruding outside of main body 4. The part protruding outside of main body 4 is referred to as neck 20. Neck 20 is covered with cover member 21 from above. Neck 20 is also covered with pad member 22 from below. Pad member 22 is made of resin and has a shock absorbing property and a heat dissipating property.

As illustrated in FIGS. 13 and 14, depthwise slide base 23 is housed in main body 4 at a position near the bottom of main body 4. Depthwise slide base 23 includes a pair of depthwise slide rails 24 extending depthwise (laterally in FIGS. 13 and 14) of main body 4. Depthwise slide member 19 is slidably attached to depthwise slide rails 24. In this case, depthwise slide rails 24 respectively hold lateral ends (front and rear sides in FIGS. 13 and 14) of depthwise slide member 19.

Neck 20 has, in its lower face, a pair of screw-receiving grooves 25 extending depthwise (laterally in FIGS. 13 and 14) of main body 4, screw-receiving grooves 25 being formed side by side. Screw-receiving grooves 25 receive fixing screws 27 inserted thereinto through screw holes 26 formed in main body 4. Display 5 is thus fixed so as not to slide depthwiseof main body 4.

In order to cause display 5 to slide backward (rearward, i.e., rightward in FIG. 13), the user loosens fixing screws 27 to unlock display 5, and then pushes display 5 rearward by hand. Depthwise slide member 19 thus slides backward relative to depthwise slide rails 24, so that display 5 slides backward as illustrated in FIG. 13. When display 5 stops sliding, the user tightens up fixing screws 27 to lock display 5.

In order to cause display 5 to slide forward (frontward, i.e., leftward in FIG. 14), the user loosens fixing screws 27 to unlock display 5, and then pulls display 5 frontward by hand. Depthwise slide member 19 thus slides forward relative to depthwise slide rails 24, so that display 5 slides forward as illustrated in FIG. 14. When display 5 stops sliding, the user tightens up fixing screws 27 to lock display 5.

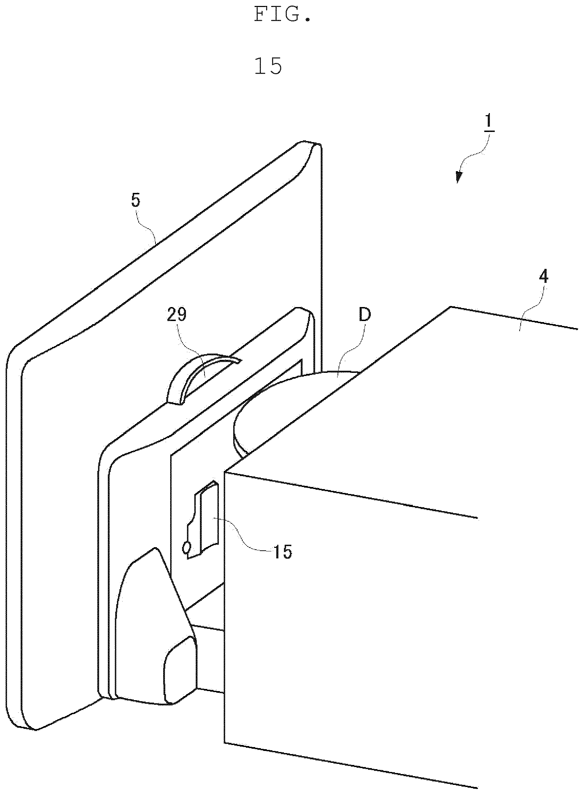

As illustrated in FIGS. 11 and 12, main body 4 has, in an upper side of its front face, insertion slot 28 for disc medium D. Examples of disc medium D may include a digital versatile disc (DVD) and a compact disc (CD). As illustrated in FIG. 15, display cover 7 has, in an upper side of its rear face, disc-receiving recess 29 located opposite insertion slot 28. In ejecting disc medium D, disc medium D can collide with the rear face of display cover 7. In such a case, however, disc-receiving recess 29 in the rear face of display cover 7 reduces the force of collision since an end face of disc medium D abuts against disc-receiving recess 29 even when disc medium D directly collides with display cover 7. This configuration prevents a recording surface (lower surface) of disc medium D from being scratched when the recording surface runs up onto display cover 7 by the collision of disc medium D with display cover 7.

In on-vehicle device 1 according to the exemplary embodiment, the vertical slide mechanism of display cover 7 causes display 5 to slide heightwise of the screen. This configuration enables display 5 to slide heightwise of the screen, thereby ensuring the visibility and operability of a hazard button even when display 5 at its initial position can impair the visibility and operability of the hazard button. This configuration also enables display 5 to slide heightwise of the screen, thereby avoiding interference of display 5 with a vehicle component such as a shift knob even when display 5 at its initial position (e.g., its default position) can interfere with the vehicle component such as the shift knob. For example, if the upper side of display 5 overlaps with the hazard button, the vertical slide mechanism causes display 5 to slide downward, thereby ensuring the visibility and operability of the hazard button. On the other hand, if the lower side of display 5 interferes with the shift knob, the vertical slide mechanism causes display 5 to slide upward, thereby avoiding the interference of display 5 with the shift knob. On-vehicle device 1 according to the exemplary embodiment ensures the visibility and operability of the hazard button as described above, or avoids the interference of display 5 with the vehicle component such as the shift knob as described above. On-vehicle device 1 according to the exemplary embodiment is therefore mounted to vehicles of various models. In other words, the exemplary embodiment of the preset disclosure provides on-vehicle device 1 with improved mountability, on-vehicle device 1 being compatible with a wide variety of vehicle models.

In the exemplary embodiment, lowering knob 15 of display cover 7 establishes engagement between first engagement portion 13 of rack base 11 and second engagement portion 14 of rack gear 12, which stops vertical slide member 9 provided with rack base 11 sliding relative to vertical slide base 8 provided with rack gear 12. The lock mechanism thus locks display 5 and fixes the vertical position of display 5.

Also in the exemplary embodiment, damper gear 17 is interposed between vertical slide member 9 and vertical slide base 8. The action of damper gear 17 prevents display 5, to which vertical slide member 9 is fixed, from sliding abruptly. This configuration thus prevents an accident that can occur when display 5 slides abruptly.

Also in the exemplary embodiment, rack gear 12 (i.e., second engagement portion 14) engages with rack base 11 (i.e., first engagement portion 13), near the first lateral end (left side in FIG. 4) of the screen while damper gear 17 engages with engaged gear 16, near the second lateral end (right side in FIG. 4) of the screen. The lock mechanism thus locks display 5 evenly at the lateral ends of the screen.

Also in the exemplary embodiment, display 5 is tiltable. This configuration allows the user to adjust display 5 at any angle of tilt. For example, if reflection of extraneous light makes the screen of display 5 hard to view, the user pushes display 5 such that display 5 tilts to face downward. This operation makes the screen of display 5 more visible.

Also in the exemplary embodiment, display 5 is slidable depthwise of main body 4. This configuration allows display 5 to slide depthwisely of main body 4, thereby avoiding interference of display 5 with, for example, console panel 2 even when display 5 at its initial position can interfere with, for example, an uneven surface of console panel 2. This configuration thus avoids the interference of display 5 with console panel 2. On-vehicle device 1 is therefore mounted to vehicles of various models. In other words, the exemplary embodiment of the preset disclosure provides on-vehicle device 1 with improved mountability, on-vehicle device 1 being compatible with a wide variety of vehicle models.

Also in the exemplary embodiment, pad member 22 attached to neck 20 of depthwise slide member 19 has a shock absorbing property. Pad member 22 therefore reduces vibrations of display 5 and thus improves the visibility of the screen. Pad member 22 also has a heat dissipating property and therefore enables heat dissipation from main body 4 and display 5 to the outside. In addition, the pad attached to neck 20 of depthwise slide member 19 prevents intrusion of foreign matter into main body 4.

The exemplary embodiment of the present disclosure has been described by way of illustration. However, the scope of the present disclosure is not limited to the exemplary embodiment, and may be modified and changed in accordance with objects within the scope recited in the claims.

It is to be noted that the exemplary embodiment may be specified by items described below.

### [Item 1]

An on-vehicle device including: a main body to be housed in a storage box of a console panel in a vehicle; a display including a screen larger in size than a front face of the main body; and a connector configured to connect the main body to the display, the connector including a vertical slide mechanism configured to cause the display to slide heightwise of the screen of the display.

With this configuration, the vertical slide mechanism enables the display to slide heightwise of the screen. This configuration enables the display to slide heightwise of the screen, thereby ensuring the visibility and operability of a hazard button even when the display at its initial position can impair the visibility and operability of the hazard button. This configuration also enables the display to slide heightwise of the screen, thereby avoiding interference of the display with a vehicle component such as a shift knob even when the display at its initial position (e.g., its default position) can interfere with the vehicle component such as the shift knob. For example, if the upper side of the display overlaps with the hazard button, the vertical slide mechanism causes the display to slide downward, thereby ensuring the visibility and operability of the hazard button. On the other hand, if the lower side of the display interferes with the shift knob, the vertical slide mechanism causes the display to slide upward, thereby avoiding the interference of the display with the shift knob. The on-vehicle device ensures the visibility and operability of the hazard button as described above, or avoids the interference of the display with the vehicle component such as the shift knob as described above. The on-vehicle device is therefore mounted to vehicles of various models. In other words, an exemplary embodiment of the preset disclosure provides an on-vehicle device with improved mountability, the on-vehicle device being compatible with a wide variety of vehicle models.

### [Item 2]

The vertical slide mechanism may include: a vertical slide base including a vertical slide rail extending heightwise of the screen; and a vertical slide member slidably attached to the vertical slide rail and fixed to the display. The vertical slide member may include a rack base having a first engagement portion. The vertical slide base may include a rack gear having a second engagement portion. The vertical slide mechanism may include a lock mechanism configured to establish engagement between the first engagement portion and the second engagement portion to lock the vertical slide member sliding relative to the vertical slide base.

With this configuration, the lock mechanism establishes the engagement between the first engagement portion of the rack base and the second engagement portion of the rack gear, which stops the vertical slide member provided with the rack base sliding relative to the vertical slide base provided with the rack gear. The lock mechanism thus locks the display and fixes the vertical position of the display.

### [Item 3]

The vertical slide member may include an engaged gear extending verticalheightwise of the screen. The vertical slide base may include a damper gear configured to engage with the engaged gear.

With this configuration, the damper gear is interposed between the vertical slide member and the vertical slide base. The action of the damper gear prevents the display, to which the vertical slide member is fixed, from sliding abruptly. This configuration thus prevents an accident that can occur when the display slides abruptly.

### [Item 4]

The rack base and the rack gear may be disposed near a first lateral end of the screen of the display. The engaged gear and the damper gear may be disposed near a second lateral end of the screen of the display.

With this configuration, the lock mechanism establishes engagement between the rack base (i.e., the first engagement portion) and the rack gear (i.e., the second engagement portion), near the first lateral end of the screen. The lock mechanism also establishes engagement between the engaged gear and the damper gear, near the second lateral end of the screen. The lock mechanism thus locks the display evenly at the lateral ends of the screen.

### [Item 5]

The connector may include a tilt mechanism configured to tilt the display.

With this configuration, the tilt mechanism tilts the display. This configuration allows a user to adjust the display at any angle of tilt. For example, if reflection of extraneous light makes the screen of the display hard to view, the user pushes the display such that the display tilts to face downward. This operation makes the screen of the display more visible.

### [Item 6]

The connector may include a depthwise slide mechanism configured to cause the display to slide depthwise of the main body.

With this configuration, the depthwise slide mechanism enables the display to slide depthwiseof the main body. This configuration allows the display to slide depthwise of the main body, thereby avoiding interference of the display with, for example, the console panel even when the display at its initial position can interfere with, for example, an uneven surface of the console panel. This configuration thus avoids the interference of the display with the console panel. The on-vehicle device is therefore mounted to vehicles of various models. In other words, an exemplary embodiment of the preset disclosure provides an on-vehicle device with improved mountability, the on-vehicle device being compatible with a wide variety of vehicle models.

### [Item 7]

The depthwise slide mechanism may include: a depthwise slide base housed in the main body, the depthwise slide base including a depthwise slide rail extending depthwisedepthwise of the main body; and a depthwise slide member slidably attached to the depthwise slide rail. The depthwise slide member may include a neck extending outside of the main body. The neck may be covered with a pad member having a shock absorbing property and a heat dissipating property.

With this configuration, the pad member attached to the neck of the depthwise slide member has a shock absorbing property. The pad member therefore reduces vibrations of the display and thus improves the visibility of the screen. The pad member also has a heat dissipating property and therefore enables heat dissipation from the main body and the display to the outside. In addition, the pad attached to the neck of the depthwise slide member prevents intrusion of foreign matter into the main body.

### [Item 8]

A display attachment device including: a main body to be housed in a storage box of a console panel in a vehicle; and a connector configured to connect the main body to a display, wherein the display includes a screen larger in size than a front face of the main body, and the connector includes a vertical slide mechanism configured to cause the display to slide heightwise of the screen of the display.

Also in the display attachment device, as in a manner similar to that of the on-vehicle device, the vertical slide mechanism causes the display to slide heightwise of the screen. This configuration enables the display to slide heightwise of the screen, thereby ensuring the visibility and operability of a hazard button even when the display at its initial position can impair the visibility and operability of the hazard button. This configuration also enables the display to slide heightwise of the screen, thereby avoiding interference of the display with a vehicle component such as a shift knob even when the display at its initial position (e.g., its default position) can interfere with the vehicle component such as the shift knob. For example, if the upper side of the display overlaps with the hazard button, the vertical slide mechanism causes the display to slide downward, thereby ensuring the visibility and operability of the hazard button. On the other hand, if the lower side of the display interferes with the shift knob, the vertical slide mechanism causes the display to slide upward, thereby avoiding the interference of the display with the shift knob. The vehicle attachment device ensures the visibility and operability of the hazard button as described above, or avoids the interference of the display with the vehicle component such as the shift knob as described above. The vehicle attachment device is therefore mounted to vehicles of various models. In other words, an exemplary embodiment of the preset disclosure provides an on-vehicle device with improved mountability, the on-vehicle device being compatible with a wide variety of vehicle models.

### INDUSTRIAL APPLICABILITY

As described above, the present disclosure provides an on-vehicle device with improved mountability, the on-vehicle device being compatible with a wide variety of vehicle models. The on-vehicle device is therefore useful as, for example, a video player, a music player, and a navigation system in an automobile.

### REFERENCE MARKS IN THE DRAWINGS

- 1: on-vehicle device
- 2: console panel
- 3: storage box
- 4: main body
- 5: display
- 6: connector
- 7: display cover
- 8: vertical slide base
- 9: vertical slide member
- 10: vertical slide rail
- 11: rack base
- 12: rack gear
- 13: first engagement portion
- 14: second engagement portion
- 15: knob
- 16: engaged gear
- 17: damper gear
- 18: hinge
- 19: depthwise slide member
- 20: neck
- 21: cover member
- 22: pad member
- 23: depthwise slide base
- 24: depthwise slide rail
- 25: screw-receiving groove
- 26: screw hole
- 27: fixing screw
- 28: insertion slot
- 29: disc-receiving recess
- 30: guide pin
- 31: groove

## Claims

1. An on-vehicle device comprising:
a main body to be housed in a storage box of a console panel in a vehicle;
a display includes a screen larger in size than a front face of the main body; and
a connector configured to connect the main body to the display,
the connector includes a vertical slide mechanism configured to cause the display to slide heightwise of the screen of the display.

2. The on-vehicle device according to claim 1, wherein
the vertical slide mechanism includes:
a vertical slide base including a vertical slide rail extending heightwise of the screen; and
a vertical slide member slidably attached to the vertical slide rail and fixed to the display,
the vertical slide member includes a rack base having a first engagement portion,
the vertical slide base includes a rack gear having a second engagement portion, and
the vertical slide mechanism includes a lock mechanism configured to establish engagement between the first engagement portion and the second engagement portion to lock the vertical slide member relative to the vertical slide base.

3. The on-vehicle device according to claim 2, wherein
the vertical slide member includes an engaged gear extending heightwise of the screen, and
the vertical slide base includes a damper gear configured to engage with the engaged gear.

4. The on-vehicle device according to claim 3, wherein
the rack base and the rack gear are disposed near a first lateral end of the screen of the display, and
the engaged gear and the damper gear are disposed near a second lateral end of the screen of the display.

5. The on-vehicle device according to any of claims 1 to 4, wherein
the connector includes a tilt mechanism configured to tilt the display.

6. The on-vehicle device according to any of claims 1 to 5, wherein
the connector includes a depthwise slide mechanism configured to cause the display to slide depthwise of the main body.

7. The on-vehicle device according to claim 6, wherein
the depthwise slide mechanism includes:
a depthwise slide base housed in the main body,
the depthwise slide base including a depthwise slide rail extending depthwise of the main body; and
a depthwise slide member slidably attached to the depthwise slide rail,
the depthwise slide member includes a neck protruding outside of the main body, and
the neck is covered with a pad member having a shock absorbing property and a heat dissipating property.

8. A display attachment device comprising:
a main body to be housed in a storage box of a console panel in a vehicle; and
a connector configured to connect the main body to a display,
wherein
the display includes a screen larger in size than a front face of the main body, and
the connector includes a vertical slide mechanism configured to cause the display to slide heightwise of the screen of the display.
